# EUROPEAN PATENT APPLICATION

(11) **EP 4 401 221 A1**
(43) Date of publication of application: **17.07.2024**
(21) Application number: 22897697.3
(22) Date of filing: 17.11.2022
(51) Int. Cl.: H01M 50/244, H01M 50/249, H01M 50/24

(54) **BATTERY, BATTERY PACK, AND VEHICLE**

(30) Priority: 24.11.2021 CN 202122911541 U
(71) Applicant: BYD Company Limited, Shenzhen, Guangdong 518118 (CN)
(72) Inventor: GUO, Yongming, Shenzhen, Guangdong 518118 (CN); LANG, Xiaoqiang, Shenzhen, Guangdong 518118 (CN); CHEN, Wei, Shenzhen, Guangdong 518118 (CN)
(74) Representative: Dehns Germany Partnerschaft mbB
(86) International application number: PCT/CN2022/132610
(87) International publication number: WO 2023/093614

(57) **Abstract**

A battery (100), a battery pack, and a vehicle are provided. A housing (10) includes a housing body (16), a first end plate (11), and a second end plate (12). The first end plate (11), the second end plate (12), and the housing body (16) define an accommodating cavity (17). An adhesive injection port is formed on the second end plate (12). A battery core assembly (20) is arranged in the accommodating cavity (17). The battery core assembly (20) includes a first surface (21). Agap exists between the second end plate (12) and the battery core assembly (20). A sealing member (23) is arranged in the gap (17). The sealing member (23) separates the gap (17) into a first channel and a second channel. The adhesive injection port is in communication with the first channel. A potting channel is provided in the housing (10). The potting channel includes the first channel and a third channel located between the first surface and an inner wall of the housing body. A potting adhesive (31) is arranged in the potting channel.

## Description

### CROSS-REFERENCE TO RELATED APPLICATIONS

The present disclosure is proposed based on Chinese Patent Application No. 202122911541.8 filed on November 24, 2021, and claims priority to the Chinese patent application. The entire content of the above-referenced application is incorporated herein by reference.

### FIELD

The present disclosure relates to the technical field of batteries, and more specifically, to a battery, a battery pack, and a vehicle.

### BACKGROUND

In the related art, components such as a battery core assembly are arranged in a battery. Generally, the components such as the battery core assembly are fixed by arranging a support in the battery, to implement fixing and mounting of the battery. However, the support arranged in the battery occupies a space, and has a complex assembly manner. If the battery encounters vibration or the like, the support easily becomes loosened, which affects safety performance of the battery. Therefore, for some batteries, a potting adhesive is injected therein to realize fixing and mounting of the batteries. However, since the potting adhesive has large fluidity before curing, the safety performance of the batteries is affected if the potting adhesive flows to other positions.

### SUMMARY

The present disclosure is intended to resolve at least one of technical problems in the related art. An object of the present disclosure is to provide a battery, a battery pack, and a vehicle.

The battery pack in an embodiment of a first aspect of the present disclosure includes a housing and a battery core assembly. The housing includes a housing body and a first end plate and a second end plate opposite to each other in a length direction of the housing body. The first end plate, the second end plate, and the housing body define a hermetic accommodating cavity. An adhesive injection port is formed on the second end plate. The battery core assembly is arranged in the accommodating cavity. The battery core assembly includes a first surface. The first surface is opposite to a side of the housing body in a height direction of the housing body. A gap exists between the second end plate and the battery core assembly. A sealing member is arranged in the gap. The sealing member separates the gap into a first channel and a second channel. The adhesive injection port is in communication with the first channel. A potting channel is provided in the housing. The potting channel includes the first channel and a third channel located between the first surface and an inner wall of the housing body. A potting adhesive is arranged in the potting channel.

According to the battery in this embodiment of the present disclosure, the potting channel and the sealing member are arranged in the housing, and the sealing member separates the gap, so that the potting adhesive injected through the adhesive injection port can flow to the third channel through the first channel, thereby filling the potting channel. In this way, the battery core assembly in the battery is fixed, which improves reliability of an internal structure of the battery.

In some embodiments, an air suction port is formed on the first end plate. The air suction port is in communication with the potting channel, so that pressure in the potting channel is less than pressure outside the housing.

In some embodiments, an air inlet spaced apart from the adhesive injection port is further formed on the second end plate. The air inlet is in communication with the second channel. The battery core assembly further includes a second surface opposite the first surface. An air suction channel is provided in the housing. The air suction channel includes the second channel, a fourth channel located between the second surface and the inner wall of the housing body, and a fifth channel located between the first end plate and the battery core assembly. The fifth channel is in communication with the air suction port.

In some embodiments, the adhesive injection port and the air suction port are aligned with each other in the length direction of the housing.

In some embodiments, the battery core assembly includes a third surface and a fourth surface opposite to each other in a width direction of the housing body. At least an outer periphery of the fourth surface and at least an outer periphery of the third surface are snugly attached to the housing body.

In some embodiments, the battery core assembly includes a battery core unit and a protective film. The protective film is wrapped on an outer peripheral side of the battery core unit. The ends of the protective film in the length direction of the housing body are open. At least one through hole is formed on the protective film. The through hole is provided at least on a side of the protective film facing the third channel.

In some embodiments, a height of the housing is D₁. The housing has two outer surfaces opposite to each other in the height direction. A distance between one of the two outer surfaces adjacent to the potting channel and a center of the adhesive injection port is D₂. D₁ and D₂ meet a relationship of 10 mm ≤ D₂ ≤ 0.25D₁.

In some embodiments, a distance between one of the two outer surfaces adjacent to the potting channel and a center of the air inlet is D₃. D₂ and D₃ meet a relationship of D₂ + 18 mm ≤ D₃ ≤ D₂ + 22 mm.

In some embodiments, the battery core assembly includes the battery core unit, a battery core support, and an insulating member. The battery core unit includes multiple subunits arranged in the length direction of the housing and connected in series. One of the multiple subunits adjacent to the second end plate is a first subunit. The battery core support is fixed at an end of the first subunit facing the second end plate. The insulating member is arranged between the battery core support and the second end plate. The sealing member is sandwiched between the second end plate and the insulating member.

In some embodiments, at least one hook is arranged on one of the insulating member and the battery core support. At least one engagement hole is provided on the other of the insulating member and the battery core support. The hook is fitted in the engagement hole.

In some embodiments, a height of the potting adhesive in the height direction of the housing is D₄. D₄ meets 0.8 mm ≤ D₄ ≤ 1.5 mm.

The battery pack in an embodiment of a second aspect of the present disclosure includes the battery in any of the foregoing embodiments.

The vehicle in an embodiment of a third aspect of the present disclosure includes the battery pack in the foregoing embodiment or the battery in any of the foregoing embodiments.

Part of additional aspects and advantages of the present disclosure is provided in the following description. The part will be apparent from the following description, or is learned through practice of the present disclosure.

### BRIEF DESCRIPTION OF THE DRAWINGS

The foregoing and/or additional aspects and advantages of the present disclosure will become apparent and comprehensible from description of embodiments made with reference to the following drawings.
FIG. 1 is a schematic diagram of a battery according to an embodiment of the present disclosure.
FIG. 2 is a three-dimensional schematic exploded view of the battery according to an embodiment of the present disclosure.
FIG. 3 is a schematic cross-sectional view of the battery according to an embodiment of the present disclosure.
FIG. 4 is an enlarged view of a portion A in FIG. 3.
FIG. 5 is a schematic diagram of a battery core assembly according to an embodiment of the present disclosure.
FIG. 6 is an enlarged view of a portion B in FIG. 5.
FIG. 7 is a schematic diagram of the battery core assembly according to an embodiment of the present disclosure.
FIG. 8 is an enlarged view of a portion C in FIG. 7.
FIG. 9 is a partial three-dimensional schematic exploded view of the battery core assembly according to an embodiment of the present disclosure.
FIG. 10 is an enlarged view of a portion D in FIG. 9.
FIG. 11 is a schematic diagram of a vehicle according to an embodiment of the present disclosure.

### REFERENCE NUMERALS:

Vehicle 10000; Battery pack 1000; Battery 100;
Housing 10; First end plate 11; Second end plate 12; Air suction port 13; Adhesive injection port 14; Air inlet 15; Housing body 16; Accommodating cavity 17; Outer surface 18;
Battery core assembly 20; First surface 21; Second surface 22; Sealing member 23; Third surface 27;
Battery core unit 24; Subunit 241; First subunit 241a; Second subunit 241b; Battery core 2411; Battery core support 25; Hook 251;
Insulating member 26; Engagement hole 261; Protective film 28; Through hole 281; Middle support 29;
Potting channel 30; potting adhesive 31; First channel a; Third channel c;
Air suction channel 40; Second channel b; Fourth channel d; Fifth channel e;
Gap 50; Conductive sheet 60.

### DETAILED DESCRIPTION

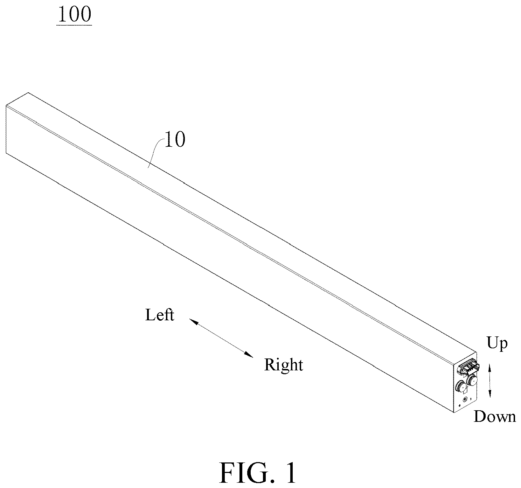

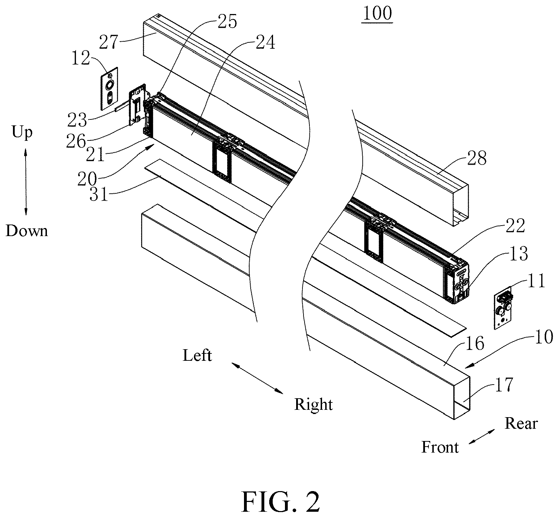

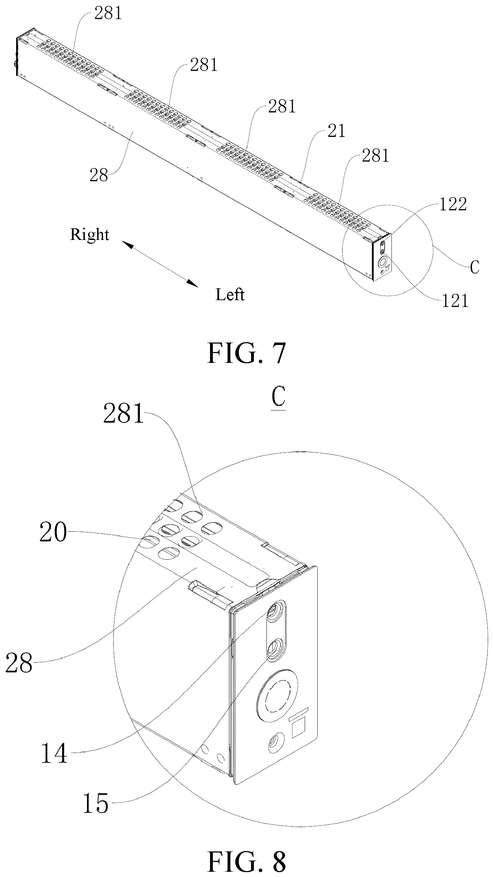

Embodiments of the present disclosure are described in detail below, and the embodiments described with reference to drawings are exemplary. A battery 100 in an embodiment of the present disclosure is described below with reference to FIG. 1 to FIG. 10. The battery includes a housing 10 and a battery core assembly 20. In the description of the present disclosure, a length direction is a left-right direction shown in FIG. 2, a height direction is an up-down direction shown in FIG. 2, and a width direction is a front-rear direction shown in FIG. 2.

As shown in FIG. 1 to FIG. 9, the housing 10 includes a housing body 16 and a first end plate 11 and a second end plate 12 opposite to each other in a length direction of the housing body 16. The first end plate 11, the second end plate 12, and the housing body 16 define a hermetic accommodating cavity 17. An adhesive injection port 14 is formed on the second end plate 12. The battery core assembly 20 is arranged in the accommodating cavity 17. The battery core assembly 20 includes a first surface 21. The first surface 21 is opposite to a side of the housing body 16 in a height direction of the housing body 16. A gap 50 exists between the second end plate 12 and the battery core assembly 20. A sealing member 23 is arranged in the gap 50. The sealing member 23 separates the gap 50 into a first channel a and a second channel b. The adhesive injection port 14 is in communication with the first channel a. A potting channel 30 is provided in the housing 10. The potting channel 30 includes the first channel a and a third channel c located between the first surface 21 and an inner wall of the housing body 16. A potting adhesive 31 is arranged in the potting channel 30.

As shown in FIG. 1 to FIG. 3, the first end plate 11 and the second end plate 12 may be respectively located at two ends in the length direction of the battery core assembly 20. The adhesive injection port 14 is formed on the second end plate 12. The battery core assembly 20 is located in the accommodating cavity 17. The first surface 21 is a surface of the battery core assembly 20 located below. An inner surface of the second end plate 12, the sealing member 23, and the battery core assembly 20 jointly define the first channel a. The first surface 21 of the battery core assembly 20 and an inner surface of a lower portion of the housing body 16 jointly define the third channel c. Apart of the potting channel 30 close to a left side and in communication with the adhesive injection port 14 is the first channel a, and a part of the potting channel 30 opposite the first surface 21 is the third channel c.

As shown in FIG. 2 to FIG. 4, the sealing member 23 is arranged between the second end plate 12 and the battery core assembly 20, to seal the gap between the second end plate 12 and the battery core assembly 20. The sealing member 23 can separate the gap 50 into the first channel a and the second channel b respectively located on an upper side and a lower side. The sealing member 23 may be made of foam. The sealing member 23 made of foam has good elasticity and compressibility, which can ensure isolation between the first channel a and the second channel b. For example, when the battery 100 encounters external factors such as vibration, the sealing member 23 can absorb the vibration to ensure that a sealing effect is not affected.

According to the battery 100 in this embodiment of the present disclosure, the potting channel 30 and the sealing member 23 are arranged in the housing 10, and the sealing member 23 separates the gap 50, so that the potting adhesive 31 injected through the adhesive injection port 14 can flow to the third channel c through the first channel a, thereby filling the potting channel 30. In this way, fixing and sealing are realized in the battery 100, and quick positioning can be realized, which facilitates automatic potting, and improves reliability of an internal structure of the battery 100.

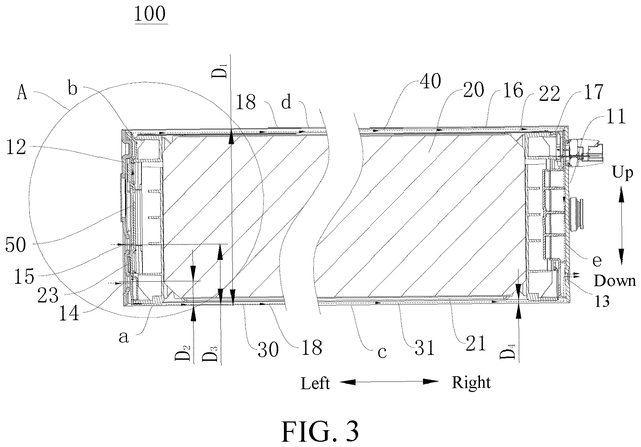

As shown in FIG. 3, an air suction port 13 is formed on the first end plate 11. The air suction port 13 is in communication with the potting channel 30, so that pressure in the potting channel 30 is less than pressure outside the housing 10. Since two ends of the potting channel 30 are respectively in communication with the adhesive injection port 14 and the air suction port 13, and the pressure in the potting channel 30 is less than atmospheric pressure outside the housing 10, the potting adhesive 31 may enter the potting channel 30 through the adhesive injection port 14, and can flow in the potting channel 30. The potting adhesive 31 is injected into the potting channel 30, so that multiple components in the battery 100 can be fixed through the potting adhesive 31 after curing, thereby ensuring structural reliability of the battery 100.

Vacuumization is performed at the air suction port 13 to generate negative pressure in the potting channel 30. Herein, the "negative pressure" is an air pressure state lower than normal pressure. The potting adhesive 31 is injected into the housing 10 at the adhesive injection port 14. The potting adhesive 31 can move from an end of the potting channel 30 in communication with the adhesive injection port 14 to an end of the potting channel 30 in communication with the air suction port 13 through an adsorption force of the negative pressure, so that the potting adhesive 31 can fill the potting channel 30.

The air suction port 13 is formed on the first end plate 11, the air suction port 13 is in communication with the potting channel 30, and air suction may be performed at the air suction port 13 to reduce the pressure in the potting channel 30, so that the potting adhesive 31 can smoothly flow into the potting channel 30, which not only improves potting efficiency, but also realizes good flow uniformity for the potting adhesive 31.

Further, as shown in FIG. 3, an air inlet 15 spaced apart from the adhesive injection port 14 is further formed on the second end plate 12. The air inlet 15 is in communication with the second channel b. The battery core assembly 20 further includes a second surface 22 opposite the first surface 21. An air suction channel 40 is provided in the housing 10. The air suction channel 40 includes the second channel b, a fourth channel d located between the second surface 22 and the inner wall of the housing 10, and a fifth channel e located between the first end plate 11 and the battery core assembly 20. The fifth channel e is in communication with the air suction port 13.

The air suction channel 40 and the potting channel 30 are isolated by the sealing member 23 at the second end plate 12, and are spaced apart in a height direction of the battery 100. Two ends of the air suction channel 40 are respectively in communication with the air inlet 15 and the air suction port 13, to form an airflow circulation channel.

The air suction channel 40 is provided in the housing 10, one end of the air suction channel 40 is in communication with the air inlet 15, and the other end is in communication with the air suction port 13. In this way, during the vacuumization at the air suction port 13, since one end of the air suction channel 40 is in communication with the outside through the air inlet 15, air pressure in the air suction channel 40 is greater than air pressure in the potting channel 30, so that the potting adhesive 31 of the potting channel 30 is prevented from partially flowing toward the air suction channel 40, which can reduce use of the potting adhesive 31, facilitate injection of the potting adhesive 31, and reduce costs for manufacturing the battery 100. That the air suction channel 40 is in communication with the outside through the air inlet 15 may be as follows. The air inlet 15 is not sealed during the vacuumization, and therefore, the air pressure in the air suction channel 40 is equal to the atmospheric pressure, so that the air pressure in the air suction channel 40 is greater than the air pressure in the potting channel 30. Alternatively, the air inlet 15 may be in communication with an external air supply tank, so that the air pressure in the air suction channel 40 is greater than the air pressure in the potting channel 30.

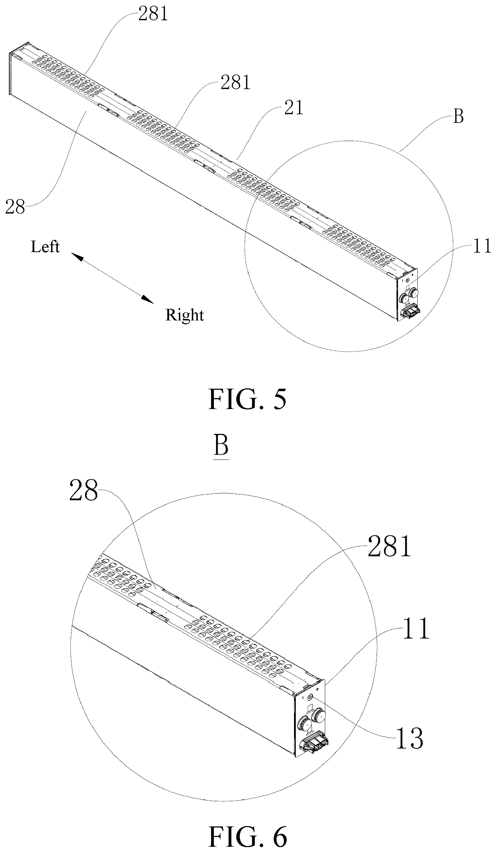

In some embodiments, as shown in FIG. 2, the first surface 21 and the second surface 22 are opposite to each other in the height direction. The first end plate 11 and the second end plate 12 may be two end plates opposite to each other shown in FIG. 2 in the left-right direction. The first surface 21 and the second surface 22 may be two surfaces opposite to each other shown in FIG. 2 and FIG. 5 in the up-down direction.

In addition, as shown in FIG. 5 to FIG. 8, the battery core assembly 20 may further include a protective film 28. The protective film 28 is wrapped on an outer peripheral side of a battery core unit 24, and the left and right ends of the protective film 28 shown in FIG. 2 are open, so that the left and right ends of the battery core unit 24 shown in FIG. 2 are exposed. The protective film 28 can protect the battery core unit 24 from external corrosion and protect an outer surface of the battery core unit 24 from scratches. At least one through hole 281 is formed on the protective film 28. The through hole 281 is provided at least on a side of the protective film 28 facing the third channel c. By providing the through hole 281, the potting adhesive 31 can flow to the battery core unit 24 through the through hole 281. The protective film 28 can not only protect the battery core assembly 20, but also improve a fixing and mounting effect of the potting adhesive 31 for the battery core assembly 20.

The battery core assembly 20 may include a third surface and a fourth surface (not shown in the figure) opposite to each other in a width direction. At least an outer periphery of the fourth surface and at least an outer periphery of the third surface 27 are snugly attached to the housing body 16, which can prevent the potting adhesive 31 from flowing to the third surface 27 and the fourth surface. During potting, the third surface 27 and the fourth surface may be arranged to snugly hold the housing body 16 through pressing or the like without interfering with the air suction channel 40 and the potting channel 30. In this way, not only is snug attachment between the third surface 27 and the housing body 16 ensured, but also isolation between the potting channel 30 and the air suction channel 40 is realized, which improves safety performance of the battery 100.

For example, the first surface 21 may be constructed from a surface of the protective film 28 facing a side of the housing body 16 (for example, a lower side shown in FIG. 2 and FIG. 3), and the second surface 22 may be constructed from a surface of the protective film 28 facing another other side of the housing body (for example, an upper side shown in FIG. 2 and FIG. 3). In other words, the first surface 21 and the second surface 22 are two surfaces of the protective film 28 opposite to each other in the height direction of the housing body 16 (or the height direction of the battery 100). The third surface 27 may be constructed from a surface of the protective film 28 facing a side of the housing body 16 (for example, a front side shown in FIG. 2), and the fourth surface may be constructed from a surface of the protective film 28 facing another side of the housing body 16 (for example, a rear side as shown in FIG. 2). In other words, the third surface 27 and the fourth surface are two surfaces of the protective film opposite to each other in the width direction of the housing body 16 (that is, a thickness direction of the battery 100). In this way, flatness of an outer surface of the battery core assembly 20 can be improved, thereby ensuring snug attachment between the third surface 27 and the housing body 16 and between the fourth surface and the housing body 16.

In some embodiments, the adhesive injection port 14 and the air suction port 13 are aligned with each other in a length direction of the housing 10. In this way, the devices can be conveniently arranged at a same height, thereby facilitating a mounting operation of an operator, and improving production efficiency of the battery 100.

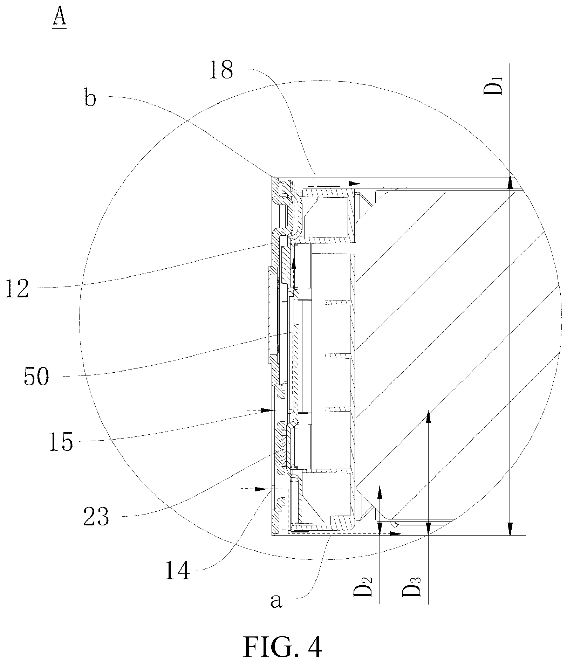

In some embodiments, as shown in FIG. 3, a height of the housing 10 is D₁. The housing 10 has two outer surfaces 18 opposite to each other in the height direction. A distance between one of the two outer surfaces 18 adjacent to the potting channel 30 and a center of the adhesive injection port 14 is D₂. D₁ and D₂ meet a relationship of 10 mm ≤ D₂ ≤ 0.25D₁. For example, D₁ = 100 mm, and D₂ = 20 mm. With reference to FIG. 3 and FIG. 4, D₁ is a height of the housing 10 in the up-down direction, and D₂ is a height between a central axis of the adhesive injection port 14 and a lower surface of the housing 10 (or a lower surface of the housing body 16). The distance between the outer surface of the housing 10 and the center of the adhesive injection port 14 is controlled, so that not only can the battery core assembly 20 be mounted to the housing 10 with internal structure strength being ensured, but also use of the potting adhesive 31 can be reduced, which realizes a proper distance between the housing 10 and the first surface 21, thereby ensuring a potting effect. In addition, a miniaturization design of the battery 100 can be promoted, and costs can be reduced.

In some embodiments, as shown in FIG. 3 and FIG. 4, a distance between one of the two outer surfaces 18 adjacent to the potting channel 30 and a center of the air inlet 15 is D₃. D₂ and D₃ meet a relationship of D₂ + 18 mm ≤ D₃ ≤ D₂ + 22 mm. For example, D₂ = 20 mm, and D₃ = 40 mm. The distance between the outer surface 18 of the housing 10 and the center of the air inlet 15 is controlled, so that a more proper distance is realized between the air inlet 15 and the adhesive injection port 14 and between the air inlet 15 and the housing 10, thereby preventing the air inlet 15 from being sealed by the potting adhesive 31, which can improve use safety of the battery 100.

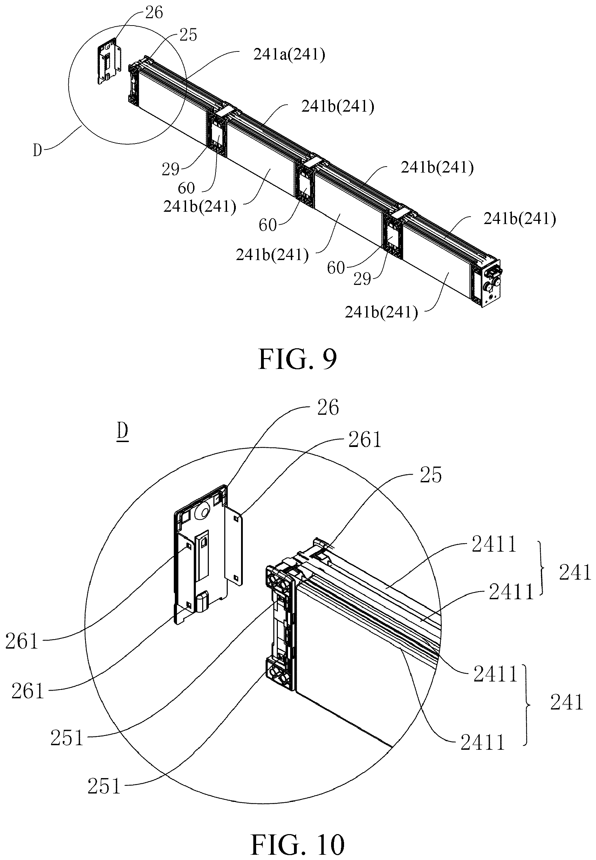

In some embodiments, as shown in FIG. 9 and FIG. 10, the battery core assembly 20 includes the battery core unit 24, a battery core support 25, and an insulating member 26. The battery core unit 24 includes multiple subunits 241 arranged in the length direction of the housing 10 and connected in series. One of the multiple subunits 241 adjacent to the second end plate 12 is a first subunit 241a, and the remaining subunits 241 may be second subunits 241b. The battery core support 25 is fixed at an end of the first subunit 241a facing the second end plate 12. The insulating member 26 is arranged between the battery core support 25 and the second end plate 12. The sealing member 23 is sandwiched between the second end plate 12 and the insulating member 26.

Referring to FIG. 9 and FIG. 10, the battery core assembly 20 includes the battery core unit 24. For example, the battery core unit 24 may include multiple subunits 241. The multiple subunits 241 may be sequentially arranged in the length direction of the housing 10 and electrically connected (for example, connected in series). Each subunit 241 may include multiple battery cores 2411 arranged in the width direction and electrically connected (for example, connected in parallel). The battery cores 2411 may be soft pack battery cores or bare battery cores. Supports are respectively arranged at both ends in a length direction of each subunit 241. The supports are respectively the battery core support 25 and a middle support 29. Two middle supports 29 are arranged between two adjacent subunits 241 in the battery core unit 24. A conductive sheet 60 is fixed on each middle support 29. Two adjacent subunits 241 are connected in series through the corresponding conductive sheets 60. The battery core assembly 20 may include two battery core units 24 arranged in the width direction of the housing 10 (that is, the thickness direction of the battery 100). The two battery core units 24 are connected in series through a connecting sheet arranged on the battery core support 25.

The insulating member 26 may be arranged between the battery core support 25 and the housing 10. By arranging the insulating member 26, the housing 10 can be insulated from the battery core unit 24, which improves the safety performance of the battery 100, and improves reliability and safety of the battery 100. For example, a side of the insulating member 26 facing the battery core unit 24 is provided with a groove. The groove extends in the height direction of the battery 100 (for example, the up-down direction shown in FIG. 2), which can improve a sealing effect of the battery core unit 24 and facilitate positioning.

In some embodiments, as shown in FIG. 9 and FIG. 10, at least one hook 251 is arranged on one of the insulating member 26 and the battery core support 25. At least one engagement hole 261 is provided on the other of the insulating member 26 and the battery core support 25. The hook 251 is fitted in the engagement hole 261. For example, multiple engagement holes 261 are provided on a side of the insulating member 26 facing the battery core support 25. Hooks 251 corresponding to the engagement holes 261 are arranged on a side of the battery core support 25 away from the battery core unit 24. During assembly between the insulating member 26 and the battery core support 25, the hooks 251 are fitted in engagement holes 261. The fitting between the insulating member 26 and the battery core support 25 through the hook 251 and the engagement hole 261 reduces difficulty in mounting the insulating member 26, and facilitates disassembly of the insulating member 26 when a quantity of battery core units 24 needs to be adjusted.

In some embodiments, as shown in FIG. 3, a height of the potting adhesive 31 in the height direction of the housing 10 (the up-down direction shown in FIG. 3) is D₄. D₄ meets 0.8 mm ≤ D₄ ≤ 1.5 mm. For example, D₄ = 1 mm. Due to resistance in the potting channel 30, an adhesive layer formed by the potting adhesive 31 has a varying thickness in the up-down direction of the housing 10. D₄ is a maximum value of the adhesive layer in the height direction, that is, a thickness of the adhesive layer after the potting channel 30 is completely filled with the potting adhesive 31. The height of the potting adhesive 31 in the height direction of the housing 10 is controlled, so that the potting adhesive 31 filled in the potting channel 30 can ensure structural strength and sealing performance, and use of the potting adhesive 31 can be reduced.

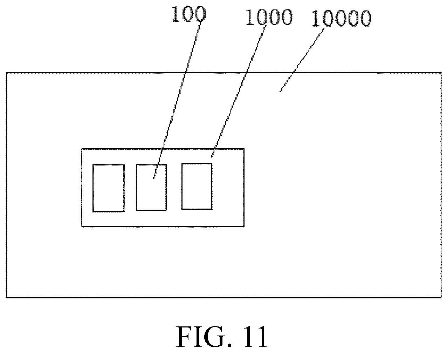

With reference to FIG. 11, a battery pack 1000 in an embodiment of a second aspect of the present disclosure includes the battery 100 in any of the foregoing embodiments. For example, the battery pack 1000 may include a box body and at least one battery 100 arranged in the box body.

With reference to FIG. 11, a vehicle 10000 in an embodiment of a third aspect of the present disclosure includes the battery pack 1000 in the foregoing embodiment, or includes the battery 100 in any of the foregoing embodiments. For example, the battery 100 may not be arranged in the box body, but is directly arranged in a battery accommodating cavity of the vehicle 10000 or the like.

With reference to FIG. 1 to FIG. 10, the potting channel 30 in communication with the adhesive injection port 14 and the air suction port 13 is provided, so that during the vacuumization at the air suction port 13, the potting adhesive 31 injected through the adhesive injection port 14 can fill the potting channel 30, which realizes fixing and sealing in the battery 100, and can realize quick positioning, thereby facilitating automatic potting. In addition, the air suction channel 40 is provided in the housing 10, one end of the air suction channel 40 is in communication with the air inlet 15, and the other end is in communication with the air suction port 13. In this way, during the vacuumization at the air suction port 13, since one end of the air suction channel 40 is in communication with the outside through the air inlet 15, air pressure in the air suction channel 40 is greater than air pressure in the potting channel 30, so that the potting adhesive 31 of the potting channel 30 is prevented from partially flowing toward the air suction channel 40, which can reduce use of the potting adhesive 31, facilitate injection of the potting adhesive 31, and reduce costs for manufacturing the battery 100.

In the description of the present disclosure, it should be understood that orientation or position relationships indicated by the terms such as "center", "length", "width", "thickness", "up", "down", "front", "rear", "left", "right", "top", "bottom", "inside", "outside", "axial direction", "radial direction", and "circumferential direction" are based on orientation or position relationships shown in the drawings, and are used only for ease and brevity of description of the present disclosure, rather than indicating or implying that the mentioned apparatus or element needs to have a particular orientation or needs to be constructed and operated in a particular orientation. Therefore, such terms should not be construed as a limitation on the present disclosure.

In the description of the present disclosure, a "first feature" and a "second feature" may include one or more features. In the description of the present disclosure, "multiple" means two or more. In the description of the present disclosure, that the first feature is "over" or "under" the second feature may include that the first feature and the second feature are in direct contact, or may include that the first feature and the second feature are not in direct contact but are in contact by using other features therebetween. In the description of the present disclosure, that the first feature is "over", "above", or "on" the second feature includes that the first feature is directly above or obliquely above the second feature, or merely indicates that the first feature is at a higher horizontal position than the second feature.

In the description of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the foregoing terms do not necessarily mean the same embodiment or example.

Although the embodiments of the present disclosure have been shown and described, a person of ordinary skill in the art should understand that various changes, modifications, replacements, and variations may be made to the embodiments without departing from the principle and spirit of the present disclosure, and the scope of the present disclosure is defined by the appended claims and their equivalents.

## Claims

1. A battery, comprising:
a housing, comprising a housing body and a first end plate and a second end plate opposite to each other in a length direction of the housing body, the first end plate, the second end plate, and the housing body defining a hermetic accommodating cavity, and an adhesive injection port being formed on the second end plate; and
a battery core assembly, arranged in the accommodating cavity and comprising a first surface, the first surface being opposite to a side of the housing body in a height direction of the housing body, a gap existing between the second end plate and the battery core assembly, a sealing member being arranged in the gap, the sealing member separating the gap into a first channel and a second channel, the adhesive injection port being in communication with the first channel; a potting channel being provided in the housing, the potting channel comprising the first channel and a third channel located between the first surface and an inner wall of the housing body, and a potting adhesive being arranged in the potting channel.

2. The battery according to claim 1, wherein an air suction port is formed on the first end plate; and the air suction port is in communication with the potting channel, so that pressure in the potting channel is less than pressure outside the housing.

3. The battery according to claim 2, wherein an air inlet spaced apart from the adhesive injection port is further formed on the second end plate; the air inlet is in communication with the second channel; the battery core assembly further comprises a second surface opposite the first surface; an air suction channel is provided in the housing; the air suction channel comprises the second channel, a fourth channel located between the second surface and the inner wall of the housing body, and a fifth channel located between the first end plate and the battery core assembly; and the fifth channel is in communication with the air suction port.

4. The battery according to claim 2 or 3, wherein the adhesive injection port and the air suction port are aligned with each other in the length direction of the housing.

5. The battery according to any of claims 1 to 4, wherein the battery core assembly comprises a third surface and a fourth surface opposite to each other in a width direction of the housing body; and at least an outer periphery of the fourth surface and at least an outer periphery of the third surface are snugly attached to the housing body.

6. The battery according to any of claims 1 to 5, wherein the battery core assembly comprises a battery core unit and a protective film; the protective film is wrapped on an outer peripheral side of the battery core unit; two ends of the protective film in the length direction of the housing body are open; at least one through hole is formed on the protective film; and the through hole is provided at least on a side of the protective film facing the third channel.

7. The battery according to any of claims 1 to 6, wherein a height of the housing is D₁; the housing has two outer surfaces opposite to each other in the height direction; a distance between one of the two outer surfaces adjacent to the potting channel and a center of the adhesive injection port is D₂; and D₁ and D₂ meet a relationship of 10 mm ≤ D₂ ≤ 0.25D₁.

8. The battery according to claim 7, wherein a distance between one of the two outer surfaces adjacent to the potting channel and a center of the air inlet is D₃; and D₂ and D₃ meet a relationship of D₂ + 18 mm ≤ D₃ ≤ D₂ + 22 mm.

9. The battery according to any of claims 1 to 8, wherein the battery core assembly comprises:
the battery core unit, comprising a plurality of subunits arranged in the length direction of the housing and connected in series;
a battery core support, one of the plurality of subunits adjacent to the second end plate being a first subunit, and the battery core support being fixed at an end of the first subunit facing the second end plate; and
an insulating member, arranged between the battery core support and the second end plate, the sealing member being sandwiched between the second end plate and the insulating member.

10. The battery according to claim 9, wherein at least one hook is arranged on one of the insulating member and the battery core support; at least one engagement hole is provided on the other of the insulating member and the battery core support; and the hook is fitted in the engagement hole.

11. The battery according to any of claims 1 to 10, wherein a height of the potting adhesive in the height direction of the housing is D₄, and D₄ meets 0.8 mm ≤ D₄ ≤ 1.5 mm.

12. A battery pack, comprising the battery according to any of claims 1 to 11.

13. A vehicle, comprising the battery according to any of claims 1 to 11 or the battery pack according to claim 12.
